# EUROPEAN PATENT APPLICATION

(11) **EP 3 432 004 A1**
(43) Date of publication of application: **23.01.2019**
(21) Application number: 17182122.6
(22) Date of filing: 19.07.2017
(51) Int. Cl.: G01N 35/04, B65G 35/00

(54) **LABORATORY SAMPLE DISTRIBUTION SYSTEM AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: The designation of the inventor has not yet been filed
(74) Representative: Patentanwälte Ruff, Wilhelm, Beier, Dauster & Partner mbB

(57) **Abstract**

Laboratory sample distribution system (100), comprising an alignment element (200) having an alignment surface (201), a number of sample container carriers (140), wherein a respective sample container carrier (140) comprises a first surface area (141) formed on a lateral surface (143) of the sample container carrier (140) over a first peripheral angle range (150) and being arranged to contact the alignment surface (201), a second surface area (142) formed on the lateral surface (143) of the sample container carrier (140) over a second peripheral angle range (151) and being arranged to contact the alignment surface (201), drive means (110) being adapted to cause a movement of the sample container carrier (140) and/or being adapted to cause a movement of the alignment element (200), and a control unit (120) being adapted to control the drive means (110) such that a relative movement between a sample container carrier (140) and the alignment surface (201) is caused, wherein during the relative movement the lateral surface (143) contacts the alignment surface (201), wherein a friction coefficient between the second surface area (142) and the alignment surface (201) is smaller than a friction coefficient between the first surface area (141) and the alignment surface (201).

## Description

### TECHNICAL FIELD AND PRIOR ART

The invention relates to a laboratory sample distribution system and to a laboratory automation system.

Known laboratory sample distribution systems are typically used in laboratory automation systems in order to transport samples contained in sample containers between different laboratory stations.

A typical laboratory sample distribution system is shown in document WO 2013/064656 A1. Such a laboratory sample distribution system provides for a high throughput and for reliable operation. In order to identify sample containers that are transported by means of a laboratory sample distribution system, these sample containers are typically marked with barcodes. Such barcodes can be read using barcode reading devices.

While identification of sample containers using barcodes is in principle a reliable and simple method for identification, it has been recognized that a specific problem arises in laboratory sample distribution systems when barcodes do not extend over a whole horizontal circumference of a sample container, because a barcode reading device has typically only the ability to detect less than 180° of a sample container. Thus, there arises a need for ensuring that barcodes can be read reliably in a laboratory sample distribution system.

### SUMMARY OF THE INVENTION

It is the object of the invention to provide a laboratory sample distribution system and a laboratory automation system having improved properties.

This object is solved by a laboratory sample distribution system according to claim 1 and a laboratory automation system according to claim 15.

The invention relates to a laboratory sample distribution system. The laboratory sample distribution system comprises one or more alignment elements. The alignment element may e.g. be embodied as a bound or a side wall of the laboratory sample distribution system.

The alignment element comprises an, e.g. flat, alignment surface. The alignment surface may be segmented into a number (e.g. 1 to 5) of sub alignment surfaces.

The laboratory sample distribution system further comprises a number (e.g. 1 to 10000) of sample container carriers. A respective sample container carrier comprises a first surface area on a lateral surface of the sample container carrier over a first peripheral angle range. The lateral surface may be a shell surface, e.g. a cylindrical shell surface, of the sample container carrier. The first peripheral angle range may e.g. have a size of 360°, 355°, 350°, 345° or 340° angular degrees. The first surface area is intended to contact the alignment surface.

The respective sample container carrier further comprises a second surface area on the lateral surface of the sample container carrier over a second peripheral angle range. The second peripheral angle range may e.g. have a size of 5°, 10°, 15° or 20° angular degrees. The second surface area is intended to contact the alignment surface. The second surface area and the first surface area may be on a different or same vertical level of the sample container carrier.

The sample container carriers may comprise a magnetically active element, e.g. in form of a permanent magnet.

The sample container carriers are typically adapted to carry one or more sample containers. The sample containers typically contain a laboratory sample to be analyzed.

The laboratory sample distribution system further comprises drive means being adapted to cause a movement of the sample container carriers and/or of the alignment element. The drive means may be embodied as electro-magnetic actuators, e.g. solenoids having a ferromagnetic core, such that a magnetic drive force may be applied to the sample container carriers and/or the alignment element. In an alternative embodiment the drive means may be embodied as a belt drive.

The laboratory sample distribution system further comprises a control unit being adapted to control the drive means such that a relative movement between a sample container carrier and the alignment surface and/or the alignment element is caused. The control unit may cause a movement of the sample container carrier along and in contact with the alignment surface. During the relative movement the lateral surface contacts or interacts with the alignment surface.

The control unit may be adapted to activate the drive means, such that the sample container carriers move simultaneously and independently from one another along pre-calculated routes. The control unit may be a microprocessor, a microcontroller, a field programmable gate array, a standard computer, or a similar device.

A friction coefficient between the second surface area and the alignment surface is smaller than a friction coefficient between the first surface area and the alignment surface.

The properties of the first surface area, the properties of the second surface area and the properties of the alignment surface may be material dependent and/or may be dependent on a surface structure. At least one of the alignment surface, the first surface area and the second surface area may be electrostatic, magnetic, metallic, adhesive, toothed or elastic. The sample container carrier and/or the alignment element may be made of a respective material chosen such that the friction coefficient between the second surface area and the alignment surface is smaller than a friction coefficient between the first surface area and the alignment surface. The alignment element and/or the sample container carrier may comprise a section made of rubber, an adhesive material and/or a magnetic material. The first surface area and/or the alignment surface may have a gear-wheeled shape.

By means of the inventive laboratory sample distribution system, a sample container carrier can be oriented in a defined manner, e.g. for reading a barcode placed on a sample container carried by the sample container carrier. The relative movement between a sample container carrier and the alignment surface is caused when the defined orientation of the sample container carrier is required, in particular before or after the sample container is removed from or inserted in the sample container carrier, e.g. at an in-sort and/or out-sort station.

According to an embodiment the friction coefficient between the first surface area and the alignment surface is chosen such that a rotation of the sample container carrier is caused during the relative movement between the sample container carrier and the alignment surface when the first surface area and the alignment surface contact each other. The friction coefficient between the second surface area and the alignment surface is chosen such that a rotation of the sample container carrier is prevented during the relative movement between the sample container carrier and the alignment surface when the second surface area and the alignment surface contact each other. The sample container carrier may rotate around a vertical rotational axis.

According to an embodiment the first surface area and/or the alignment surface are corrugated or toothed. The friction coefficient between the first surface area and the alignment surface may depend on the properties of the corrugation.

The toothed first surface area and/or the toothed alignment surface may form a gear. The toothed first surface area and/or the toothed alignment surface may form a tooth system or a drive.

According to an embodiment the lateral surface is geometrically formed to prevent a rotation of the sample container carrier during the relative movement between the sample container carrier and the alignment surface when the second surface area and the alignment element contact each other. The lateral surface may be curved to prevent a rotation of the sample container carrier. The lateral surface or the second surface area may form a protrusion or a recess to prevent a rotation of the sample container carrier.

According to an embodiment the lateral surface is geometrically formed such that an interaction between the alignment surface and the first surface area is prevented when the second surface area contacts the alignment surface.

According to an embodiment the lateral surface is geometrically formed to displace the sample container carrier perpendicular to the alignment surface during the relative movement between the sample container carrier and the alignment surface. E.g., the second surface area may protrude to displace the sample container carrier perpendicular to the alignment surface during the relative movement between the sample container carrier and the alignment surface. The displacement of the sample container carrier may prevent a contact or interaction between the first surface area and the alignment surface. The first surface area and the alignment surface may be decoupled or disconnected when the sample container carrier is displaced.

According to an embodiment the lateral surface is geometrically formed to displace the sample container carrier perpendicular to the alignment surface during the relative movement between the sample container carrier and the alignment surface such that a rotation of the sample container carrier is prevented during the relative movement between the sample container carrier and the alignment surface.

According to an embodiment the lateral surface is geometrically formed to displace the sample container carrier perpendicular to the alignment surface during the relative movement between the sample container carrier and the alignment surface such that the first surface area is transitioned from a state being in contact and/or interaction with the alignment surface to a state not being in contact and/or interaction with the alignment surface.

According to an embodiment the first surface area and the second surface area are segments of an annular rim or are segments of a ring-shaped surface of the sample container carrier. The first surface area and the second surface area may be arranged adjacent to each other. The first surface area and the second surface area together may form the annular rim or ring-shaped surface.

According to an embodiment the alignment surface is a rubberized surface.

According to an embodiment the first peripheral angle range ranges between 180°-360°, in particular 225°-360°.

According to an embodiment the second peripheral angle range ranges between 0°-180°, in particular 0°-5°.

According to an embodiment the laboratory sample distribution system further comprises a transport surface, wherein the transport surface is adapted to support the number of sample container carriers and/or the alignment element. The drive means are adapted to move the sample container carriers and/or the alignment element on top of the transport surface. The control unit is configured to control the movement of the sample container carriers and/or of the alignment element on top of the transport surface by driving the drive means such that the sample container carriers move along corresponding transport paths. The transport surface may be denoted as transport plane. The sample container carriers and/or the alignment element may be adapted to move in two dimensions on the transport surface. The number of sample container carriers and/or the alignment element may slide over the transport surface, in particular on top over the transport surface. The control device may be an integrated circuit, tablet computer, smartphone, computer or processing control system.

According to an embodiment the drive means are placed stationary below the transport surface. The drive means may comprise actuators, in particular electro-magnetic actuators. The actuators of the drive means may be arranged in two dimensions, in particular in a grid or matrix having rows and columns along which the actuators are arranged.

The invention further relates to a laboratory automation system. The laboratory automation system comprises a number (e.g. 1 to 50) of laboratory stations, preferably pre-analytical, analytical and/or post-analytical stations and a laboratory sample distribution system as described above.

The laboratory sample distribution system is adapted to distribute sample container carriers between the laboratory stations. The laboratory stations may be arranged adjacent or directly next to the laboratory sample distribution system, in particular to the transport surface of the laboratory sample distribution system.

The number of laboratory stations may comprise pre-analytical, analytical and/or post-analytical laboratory stations.

Pre-analytical laboratory stations may be adapted to perform any kind of pre-processing of samples, sample containers and/or sample container carriers.

Analytical laboratory stations may be adapted to use a sample or part of the sample and a reagent to generate a measuring signal, the measuring signal indicating if and in which concentration, if any, an analyte is existing.

Post-analytical laboratory stations may be adapted to perform any kind of post-processing of samples, sample containers and/or sample container carriers. The pre-analytical, analytical and/or post-analytical laboratory stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, a sealing/desealing station, a pushing station, a belt station, a conveying system station and/or a gripper station for moving the sample container to or from the sample container carrier.

### BRIEF DESCRIPTION OF THE DRAWINGS

The invention will be described in detail with respect to the drawings schematically depicting embodiments of the invention. In detail:
- Fig. 1: shows a perspective view of a laboratory automation system,
- Fig. 2: shows a sample container carrier used by the laboratory automation system depicted in Fig. 1 in more detail, and
- Fig. 3: shows an alignment element interacting with a sample container carrier in order to align the sample container carrier in a defined orientation.

### DETAILED DESCRIPTION OF EMBODIMENTS OF THE INVENTION

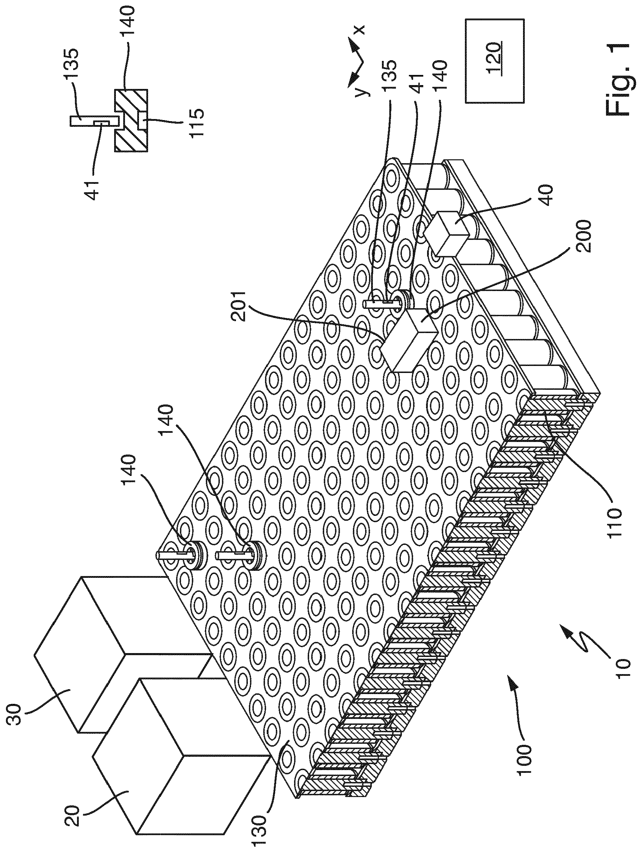

Fig. 1 shows a perspective view of a laboratory automation system 10 according to the invention.

The laboratory automation system 10 comprises two laboratory stations 20, 30, e.g. in form of a pre-analytical, an analytical and/or a post-analytical station.

The laboratory automation system 10 further comprises a laboratory sample distribution system 100. The laboratory sample distribution system 100 is adapted to distribute sample container carriers 140 between the laboratory stations 20, 30. The laboratory stations 20, 30 are arranged adjacent to the laboratory sample distribution system 100.

For the purpose of explanation only two laboratory stations 20, 30 and three sample container carriers 140 are shown. Self-evidently, more than two laboratory stations 20, 30 and more than three sample container carriers 140 may be comprised by the laboratory automation system 10.

The laboratory sample distribution system 100 further comprises drive means 110 in form of solenoids having a ferromagnetic core being adapted to cause a movement of the sample container carriers 140. The drive means 110 are placed stationary below a transport surface 130 in rows and columns. The transport surface 130 is adapted to support the number of sample container carriers 140.

A respective sample container carrier 140 comprises a magnetically active device 115 in form of a permanent magnet 115. A magnetic field generated by the drive means 110 interacts with a respective magnetically active device 115 such that a sample container carrier 140 can be translationally moved in two directions x, y on/over the transport surface 130.

The laboratory sample distribution system 100 further comprises a control unit 120 being configured to control the drive means 110 such that the sample container carriers 140 move on top of the transport surface 130 along corresponding transport paths.

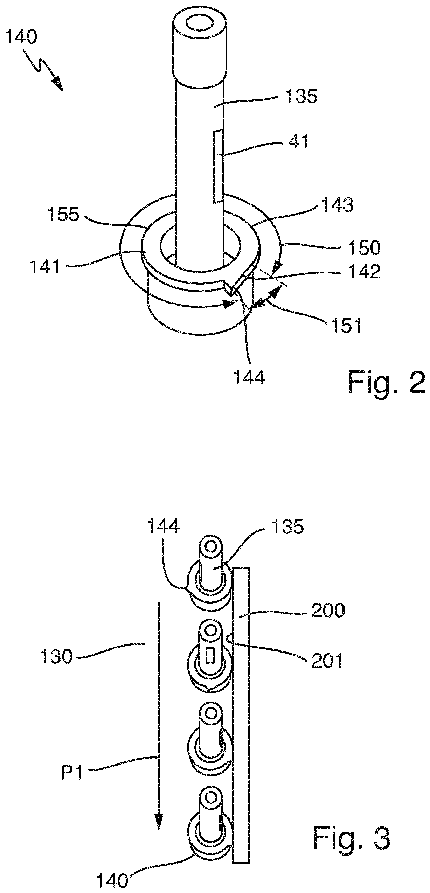

The laboratory sample distribution system 100 further comprises a barcode scanning unit 40 for reading a barcode 41 attached to a laboratory sample container 135, see Fig. 2. A suitable orientation of the barcode 41 is required for barcode reading by the barcode scanning unit 40. For this purpose the laboratory sample distribution system 100 is adapted to rotate the sample container carriers 140 until a suitable orientation for reading the barcode 41 is achieved, as will be explained further below.

Fig. 2 shows a sample container carrier 140 used in the laboratory automation system 10 of figure 1 in more detail. The sample container carrier 140 carries the sample container 135. The barcode 41 is placed on the sample container 135 and codes sample related information.

The sample container carrier 140 comprises a first rubberized surface area 141 formed on a lateral surface 143 of the sample container carrier 140 over a first peripheral angle range 150. The sample container carrier 140 further comprises a metallic second surface area 142 formed on the lateral surface 143 over a second peripheral angle range 151. The first surface area 141 and the second surface area 142 are arranged on the same vertical level of the sample container carrier 140. The first peripheral angle range 150 extends over 335° and the second peripheral angle range 151 extend over 25°. The first surface area 141 and the second surface area 142 are segments of an annular rim 155. The first surface area 141 and the second surface area 142 are arranged adjacent to one another for forming the closed annular rim 155.

Now again referring to Fig. 1, the laboratory sample distribution system 100 further comprises a cuboid-shaped alignment element 200 having a metallic alignment surface 201. The alignment surface 201 is formed as a flat plane on a side of the alignment element 200.

Referring to figure 3, the control unit 120 is further adapted to control the drive means 110 such that a relative movement between the sample container carrier 140 and the alignment surface 201 is caused. During the relative movement the first surface area 141 or the second surface area 142 of the lateral surface 143 contacts the alignment surface 201.

A friction coefficient between the rubberized first surface area 141 and the alignment surface 201 is chosen such that a rotation of the sample container carrier 140 is caused during the relative movement between the sample container carrier 140 and the alignment surface 201 when the first surface area 141 and the alignment surface 201 contact each other.

The friction coefficient between the second metallic surface area 142 and the metallic alignment surface 201 is chosen such that a rotation of the sample container carrier 140 is prevented during the relative movement between the sample container carrier 140 and the alignment surface 201 when the second surface area 142 and the alignment surface 201 contact each other.

The lateral surface 143 is further geometrically formed to displace the sample container carrier 140 perpendicular to the alignment surface 201 during the relative movement between the sample container carrier 140 and the alignment surface 201. For this purpose the second surface area 142 comprises a protrusion 144 causing the displacement of the sample container carrier 140 when the protrusion 144 contacts the alignment surface 201 during the relative movement.

Fig. 3 shows the alignment element 200 interacting with the sample container carrier 140 in order to align the sample container carrier 140. The sample container carrier 140 moves along the alignment surface 201 in a direction P1. For overview purpose four different orientations of the sample container carrier 140 are shown during the relative movement.

In the beginning of the relative movement the first surface area 141 and the alignment surface 201 are in contact with each other. Consequently, the sample container carrier 140 rotates during the movement in the direction P1. The rotation of the sample container carrier 140 ends as soon as the second surface area 142 and the alignment surface 201 get in contact with each other.

Thus, due to the friction properties of the first surface area 141 and of the second surface area 142, after the relative movement along the alignment surface 201 the sample container carrier 140 is always oriented in an orientation such that the second surface area 142 and the alignment surface 201 are in contact with each other. After the aligning, the barcode scanning unit 40 may read the barcode 41 and the laboratory sample distribution system 100 may distribute the sample container carrier 140 in response to the read barcode.

The first surface area and/or the alignment surface may additionally be corrugated or toothed.

## Claims

1. Laboratory sample distribution system (100), comprising:
- an alignment element (200) having an alignment surface (201),
- a number of sample container carriers (140), wherein a respective sample container carrier (140) comprises:
- a first surface area (141) formed on a lateral surface (143) of the sample container carrier (140) over a first peripheral angle range (150) and being arranged to contact the alignment surface (201),
- a second surface area (142) formed on the lateral surface (143) of the sample container carrier (140) over a second peripheral angle range (151) and being arranged to contact the alignment surface (201),
- drive means (110) being adapted to cause a movement of the sample container carriers (140) and/or being adapted to cause a movement of the alignment element (200), and
- a control unit (120) being adapted to control the drive means (110) such that a relative movement between a sample container carrier (140) and the alignment surface (201) is caused, wherein during the relative movement the lateral surface (143) contacts the alignment surface (201),
- wherein a friction coefficient between the second surface area (142) and the alignment surface (201) is smaller than a friction coefficient between the first surface area (141) and the alignment surface (201).

2. Laboratory sample distribution system (100) according to claim 1, **characterized in that**
- the friction coefficient between the first surface area (141) and the alignment surface (201) is chosen such that a rotation of the sample container carrier (140) is caused during the relative movement between the sample container carrier (140) and the alignment surface (201) when the first surface area (141) and the alignment surface (201) contact each other, and
- the friction coefficient between the second surface area (142) and the alignment surface (201) is chosen such that a rotation of the sample container carrier (140) is prevented during the relative movement between the sample container carrier (140) and the alignment surface (201) when the second surface area (142) and the alignment surface (201) contact each other.

3. Laboratory sample distribution system (100) according to claim 1 or 2, **characterized in that**
- the first surface area (141) and/or the alignment surface (201) are corrugated or toothed.

4. Laboratory sample distribution system (100) according to one of the preceding claims, **characterized in that**
- the lateral surface (143) is geometrically formed to prevent a rotation of the sample container carrier (140) during the relative movement between the sample container carrier (140) and the alignment surface (201) when the second surface area (142) and the alignment element (200) contact each other.

5. Laboratory sample distribution system (100) according to one of the preceding claims, **characterized in that**
- the lateral surface (143) is geometrically formed such that an interaction between the alignment surface (201) and the first surface area (141) is prevented when the second surface area (142) contacts the alignment surface (201).

6. Laboratory sample distribution system (100) according to one of the preceding claims, **characterized in that**
- the lateral surface (143) is geometrically formed to displace the sample container carrier (140) perpendicular to the alignment surface (201) during the relative movement between the sample container carrier (140) and the alignment surface (201).

7. Laboratory sample distribution system (100) according to claim 6, **characterized in that**
- the lateral surface (143) is geometrically formed to displace the sample container carrier (140) perpendicular to the alignment surface (201) during the relative movement between the sample container carrier (140) and the alignment surface (201) such that a rotation of the sample container carrier (140) is prevented during the relative movement between the sample container carrier (140) and the alignment surface (201).

8. Laboratory sample distribution system (100) according to claim 6 or 7, **characterized in that**
- the lateral surface (143) is geometrically formed to displace the sample container carrier (140) perpendicular to the alignment surface (201) during the relative movement between the sample container carrier (140) and the alignment surface (201) such that the first surface area (141) is transitioned from a state being in contact with the alignment surface (201) to a state not being in contact with the alignment surface (201).

9. Laboratory sample distribution system (100) according to one of the preceding claims, **characterized in that**
- the first surface area (141) and the second surface area (142) are segments of an annular rim (155).

10. Laboratory sample distribution system (100) according to one of the preceding claims, **characterized in that**
- the alignment surface (201) is rubberized, and/or
- the first surface area (141) is rubberized.

11. Laboratory sample distribution system (100) according to one of the preceding claims, **characterized in that**
- the first peripheral angle range (150) ranges between 180°-360°.

12. Laboratory sample distribution system (100) according to one of the preceding claims, **characterized in that**
- the second peripheral angle range (151) ranges between 0°-180°.

13. Laboratory sample distribution system (100) according to one of the preceding claims, comprising:
- a transport surface (130), wherein the transport surface (130) is adapted to support the number of sample container carriers (140) and/or the alignment element (200),
- wherein the drive means (110) are adapted to move the sample container carriers (140) and/or the alignment element (200) on top of the transport surface (130), and
- wherein the control unit (120) is configured to control the movement of the sample container carriers (140) and/or of the alignment element (200) on top of the transport surface (130) by driving the drive means (110) such that the sample container carriers (140) and/or the alignment element (200) move along corresponding transport paths.

14. Laboratory sample distribution system (100) according to claim 13, **characterized in that**
- the drive means (110) are placed stationary below the transport surface (130).

15. Laboratory automation system (10), comprising
- a number of laboratory stations (20, 30), preferably pre-analytical, analytical and/or post-analytical stations, and
- a laboratory sample distribution system (100) according to one of the preceding claims, wherein the laboratory sample distribution system (100) is adapted to distribute sample container carriers (140) between the number of laboratory stations (20, 30).
